# EUROPÄISCHE PATENTSCHRIFT

(11) **EP 2 112 750 B1**
(45) Veröffentlichungstag und Bekanntmachung des Hinweises auf die Patenterteilung: **11.01.2012**
(21) Anmeldenummer: 08007967.6
(22) Anmeldetag: 24.04.2008
(51) Int. Cl.: H02K 9/06, H02K 19/16, F04D 29/46

(54) **Dynamoelektrische Maschine**
Dynamoelectric machine
Machine dynamoélectrique

(43) Veröffentlichungstag der Anmeldung: 28.10.2009
(73) Patentinhaber: SIEMENS AKTIENGESELLSCHAFT, 80333 München (DE)
(72) Erfinder: Adolf, Haiko, Dr., 99099 Erfurt (DE); Bergendahl, Dirk, 45894 Gelsenkirchen (DE); Schulz, Michael, 32278 Kirchlengern (DE); Stasiak, Oliver, 45475 Mülheim an der Ruhr (DE); Traeger, Hermann Lucas, 45472 Mülheim an der Ruhr (DE); Walbeck, Thomas Robert, Dr., 45468 Mülheim (DE); Zimmermann, Fred, 45289 Essen (DE)

(56) Entgegenhaltungen:
- EP-A- 1 006 644
- DE-A1- 1 503 580
- DE-A1- 3 424 497

## Beschreibung

Die Erfindung betrifft eine dynamoelektrische Maschine, umfassend einen Stator und einen drehbar gelagerten Rotor, der in einer axialen Richtung verschiebbar ist, wobei eine Komponente um den Rotor angeordnet ist.

Des Weiteren betrifft die Erfindung ein Verfahren nach Anspruch 5.

Unter einer dynamoelektrischen Maschine im Sinne der vorliegenden Anmeldung wird jeder Energiewandler verstanden, der elektrische in mechanische Energie oder mechanische in elektrische Energie umwandelt. Insbesondere ist unter einer dynamoelektrischen Maschine ein Generator zur elektrischen Energieversorgung zu verstehen.

Ein Generator als Ausführungsform einer elektrischen Maschine besteht unter anderem aus elektrisch aktiven Teilen, zu denen ein Stator und ein drehbar gelagerter Rotor gehören. Der Stator umfasst mehrere aufeinander geschichtete Segmentplatten, die auch als Segmentbleche oder Eisenbleche bezeichnet werden. Die Segmentbleche sind mit Nuten zur Aufnahme von Wicklungen versehen. Eine hohe Magnetisierbarkeit und kleine Hysterese- oder Wirbelstromverluste der Segmentbleche sind von Vorteil. Durch dünne Papier-, Lack- oder Oxidschichten werden die Segmentbleche gegeneinander isoliert. Ein komplett ausgebildeter Stator besteht aus vielen Segmentblechen. Das Gebilde der aufeinander gestapelten Segmentbleche wird auch als Blechpaket bezeichnet.

Um die Erwärmung des Generators zu begrenzen, müssen der Stator und der Läufer gekühlt werden. Es gibt im Wesentlichen drei wichtige Arten der Kühlung: Frischluftkühlung: über ein Gebläse wird Frischluft angesaugt, durch entsprechende Filter gereinigt und in den Generator eingeblasen. Geschlossener Kreislauf: die gereinigte Luft wird in einem geschlossenen Kreislauf durch den Generator geblasen und in Wärmetauschern durch Kühlwasser wieder abgekühlt. Die Abwärme kann auch zu Heizzwecken verwendet werden. Reinwasserkühlung: bei Generatoren mit großer Leistung wird eigens aufbereitetes Wasser durch den Generator in einen geschlossenen Kreislauf geleitet. Wasserstoffkühlung: der in einem Kreislauf bewegte gasförmige Wasserstoff gibt über die an den Seiten der Generatoren angebrachten Wasserkühler die Verlustwärme ab. Das Gehäuse der Generatoren muss dabei gasdicht und druckfest ausgeführt sein, um einer eventuellen Knallgasexplosion standhalten zu können. Die Verwendung von Wasserstoffgas anstelle der Luft bewirkt geringere Gasreibungsverluste und doppeltes Wärmeabfuhrvermögen.

Es ist seit langem allgemein bekannt, die Verlustwärme in Generatoren mittels Kühlgas abzuführen. Hierbei wurde ursprünglich als Kühlgas Luft vorgesehen. Allerdings sind luftgekühlte Generatoren nur für niedrige Leistungen bis max. 300 MVA vorgesehen, da die mit Luft erzielbare Kühlwirkung zwangsläufig begrenzt ist und daher bei höheren Leistungen mit Luft nicht die erforderliche Kühlung gewährleistet ist.

Für Generatoren höherer Leistung wird als Kühlmedium bevorzugt Wasserstoffgas (H₂) eingesetzt, welches gegenüber Luft eine deutlich höhere Kühlleistung ermöglicht, die erhöht werden kann, indem man das Wasserstoffgas unter Druck setzt und die Kühlung unter Überdruck durchführt. Da Wasserstoff eine höhere Wärmekapazität und eine höhere Wärmeleitfähigkeit als Luft aufweist, kann durch die Füllung des Generatorgehäuses mit Wasserstoff die Wärme besser vom Generator abgeleitet werden, als dies mit Luft möglich wäre. Allerdings erfordert die Kühlung mit Wasserstoffgas einen zusätzlichen, nicht unbeträchtlichen Aufwand, der sich sowohl bei der Anschaffung als auch später im Betrieb kostenmäßig auswirkt.

Ein Begleitproblem bei der Generatorkühlung mit Wasserstoffgas sind die praktisch unvermeidbaren Verluste an Wasserstoffgas, hauptsächlich infolge von Leckagen an der Wellendurchführung der Rotorwelle durch das Gehäuse des Generators. Um diese Verluste zu verhindern oder zumindest niedrig zu halten, sind die Wellendurchführungen jeweils mit einer Wellendichtung versehen, die als Ölbad-Abdichtung ausgebildet sind. Ein weiteres Problem ist die Feuchtigkeit des Wasserstoffkühlgases. Während einer Inbetriebnahme oder während einer Revision sind in der Regel die Isolationsbauteile des Generators der Luftatmosphäre ausgesetzt. Das führt dazu, dass Feuchtigkeit aus der Luft von den Isolationsbauteilen aufgenommen wird. Während des Betriebs des Generators unter Wasserstoffkühlgas-Atmosphäre wird durch die in den Isolationsbauteilen angesammelte Luftfeuchtigkeit an den Wasserstoff abgegeben.

Bei luftgekühlten Generatoren zirkuliert die Luft im Generatorgehäuse und durch die Spulen im Stator. Die Ventilatoren sind direkt auf dem Rotor aufgebracht. Das Kühlgas strömt in der Regel über eine Leitvorrichtung, die auch als Kompressordiffusor bezeichnet werden kann, aus einer im Wesentlichen radialen Richtung in den Generator hinein, wobei der Kompressordiffusor dem Stator zugeordnet werden kann und daher kein drehbares Bauteil ist. Das Kühlgas wird anschließend über ein auf dem Rotor angeordnetes Kompressorlaufrad umgelenkt und ggf. verdichtet, wodurch ein Kühlgas mit optimalen physikalischen Parametern zur Kühlung des Rotors erreicht wird. Die zur Verfügung stehenden Strömungsquerschnitte für das Kühlgas im Kompressordiffusor als auch im Kompressorlaufrad sind in Strömungsrichtung aufeinander angepasst. Allerdings kann im Betrieb eine Kraft auf den Rotor wirken, die dazu führt, dass der Rotor in einer axialen Richtung verschoben wird. Bei einem Einsatz des Generators im Rahmen eines Turbosatzes rührt die Kraft von dem Turbinenschub der Dampfturbine bzw. der Gasturbine. Das Verschieben des auf den Rotor befindlichen Kompressorlaufrades gegenüber dem Kompressordiffusor führt allerdings dazu, dass die Strömungsquerschnitte gegeneinander versetzt sind, so dass keine optimalen Strömungsverhältnisse für das Kühlgas vorherrschen.

Die DE 34 24 497 offenbart eine dynamoelastische Maschine mit einer Gebläsediffusion - und Kollektoranordnung.

Die DE 1 503 580 betrifft eine Radial-Kreiselmaschine mit veränderbaren Strömungsquerschnitten.

Die EP 1 006 644 zeigt eine gasgekühlte elektrische Maschine mit einem Axialventilator.

Wünschenswert wäre es, dass eine Verschiebung des Rotors nicht zu einer Störung der Strömungsverhältnisse für das Kühlgas führen würde.

Des Weiteren wäre es wünschenswert, eine axiale Bewegung kompensieren zu können.

Es ist daher eine Aufgabe der Erfindung, eine axiale Bewegung in der dynamoelektrischen Maschine zu kompensieren.

Des Weiteren besteht die Aufgabe der Erfindung darin, eine elektrodynamische Maschine mit einer verbesserten Kühlmöglichkeit anzugeben.

Gelöst wird diese Aufgabe durch eine dynamoelektrische Maschine, gemäß Anspruch 1 sowie ein Verfahren zur Kühlung einer dynamoelastischen Maschine gemäß Anspruch 5. Weitere Ausgestaltungen der Erfindung sind Gegenstand der abhängigen Ansprüche.

Die Erfindung geht daher den Weg, eine Komponente, die bislang in dynamoelektrischen Maschinen als feststehende Komponente ausgebildet wurde, beweglich auszubilden. Dazu wird eine Verschiebevorrichtung eingesetzt, die es ermöglicht, die Komponente in einer axialen Richtung zu verschieben. Dadurch wird eine im Betrieb auftretende Verschiebung des Rotors in einer axialen Richtung gefolgt. Ein im Betrieb möglicherweise auftretender axialer Versatz zwischen der Komponente und dem drehbar gelagerten Rotor wird daher wirksam vermieden.

In einer vorteilhaften Weiterbildung weist die Verschiebevorrichtung einen Verschiebekasten zum Anbringen an die Komponente auf, wobei die Verschiebevorrichtung ferner einen Aktor zum Ausüben einer Kraft auf den Verschiebekasten aufweist, wobei der Aktor an einer Maschinenkomponente angeordnet ist. Der Aktor ist hierbei ein wesentliches Bauteil, das zum Ausüben einer Kraft ausgebildet ist. Solche Aktoren können beispielsweise elektrisch oder hydraulisch angetrieben sein. Der Aktor wird hierbei an einer Maschinenkomponente fest angeordnet. Als Maschinenkomponente könnte beispielsweise das Gehäuse der dynamoelektrischen Maschine dienen. Das Gehäuse ist in der Regel fest mit einem Fundament verbunden, so dass die Anordnung des Aktors an die Maschinenkomponente zu einem fest angeordneten Ort für den Aktor führt. Die Verschiebevorrichtung wird an die Komponente angeordnet. Im Betrieb übt der Aktor eine Kraft auf die Verschiebevorrichtung aus, so dass die Verschiebevorrichtung in einer axialen Richtung bewegt wird. Einer Bewegung des Rotors kann somit gefolgt werden. Außerdem kann ein Versatz ausgeglichen werden.

In einer weiteren vorteilhaften Weiterbildung weist der Verschiebekasten eine Grundplatte, eine erste Anschlagplatte und eine zweite Anschlagplatte auf, wobei der Aktor zum Ausüben einer Kraft auf die erste Anschlagplatte ausgebildet ist.

In einer weiteren vorteilhaften Weiterbildung weist die dynamoelektrische Maschine ein Führungselement, z. B. eine Führungsstange auf, wobei das Führungselement in einer Halterung, z. B. einer Buchse bewegbar ist. Die Halterung ist an der Verschiebevorrichtung und das Führungselement an der Maschinenkomponente angeordnet. In alternativen Ausführungsformen kann das Führungselement an der Verschiebevorrichtung und die Halterung an der Maschinenkomponente angeordnet werden. Dadurch wird eine definiert geführte Bewegung sichergestellt. Die Verschiebevorrichtung wird sozusagen gezwungen, eine Bewegung entlang der Führungsstange bzw. der Buchse auszuführen, wobei diese Bewegung nicht linear sein muss.

Die Komponente ist über Führungsschienen bewegbar angeordnet. Diese Führungsschienen sind am Stator angeordnet. Eine präzise Führung entlang der Führungsschienen führt zu einer Minimierung von Fehlfunktionen der Verschiebevorrichtung.

Die Komponente ist als Kompressordiffusor ausgebildet, wobei der Kompressordiffusor zum Führen von Kühlmedium ausgebildet ist.

Die Erfindung wird anhand von Figuren näher beschrieben.

Es zeigen:
- Figur 1: einen Ausschnitt einer dynamoelektrischen Maschine,
- Figur 2: Darstellung eines Ausschnitts einer dynamoelektri- schen Maschine.

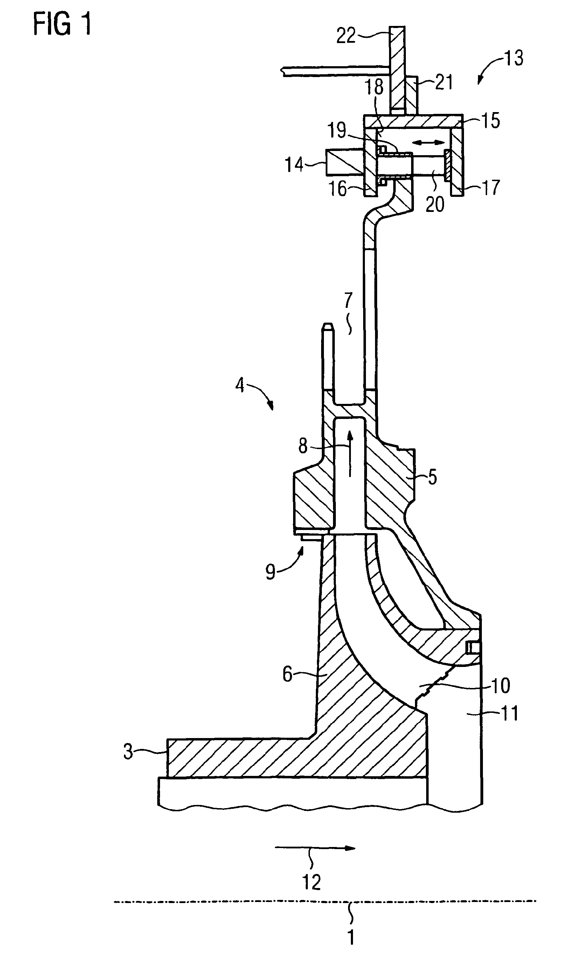

Die Figur 1 zeigt einen Ausschnitt einer nicht näher dargestellten dynamoelektrischen Maschine. Die dynamoelektrische Maschine kann als Generator ausgebildet sein. Der Generator umfasst im Wesentlichen einen um eine Rotationsachse 1 drehbar gelagerten Rotor 2. Um den Rotor 2 ist ein nicht näher dargestellter-Stator angeordnet. Im Betrieb rotiert der Rotor 2 mit einer Frequenz von 50 Hz bzw. 60 Hz um die Rotationsachse 1. Es sind allerdings auch andere, höhere Frequenzen möglich. An der stirnseitigen Seite 3 wird der Rotor 2 an eine nicht näher dargestellte Antriebseinheit angekoppelt.

Diese Antriebseinheit kann eine Dampfturbine oder eine Gasturbine sein. Der Stator umfasst mehrere aufeinander geschichtete Segmentplatten auf, die auch als Segmentbleche oder Eisenbleche bezeichnet werden. Der Rotor 2 weist eine sogenannte Rotorwicklung auf. Im Betrieb erwärmt sich der Generator erheblich und muss daher gekühlt werden. Zur Kühlung wird ein Kühlmedium über eine Kühlleitströmeinrichtung 4 in den Generator geleitet. Die Kühlleitströmeinrichtung 4 umfasst im Wesentlichen eine Komponente 5, die um den Rotor 2 angeordnet ist. Des Weiteren umfasst die Kühlleitströmeinrichtung 4 ein auf dem Rotor 2 angeordnetes Kompressorlaufrad 6, welches mit derselben Frequenz wie der Rotor 2 um die Rotationsachse 1 dreht. Im Betrieb wird in der Komponente 5 Kühlgas entlang der Kühlgasströmungsrichtung 8 geführt. An einer Übergangsstelle 9 wird das Kühlgas von dem drehenden Kompressorlaufrad 6 an die als Leitrad ausgeführte Komponente 5 überführt. Das Kühlgas strömt durch den Verdichterkanal 10.

Das Kühlgas strömt über einen Kompressorlaufradeinlass 11 in den Verdichterkanal 10. Nach einem Kompressorleitradauslass 7 strömt das Kühlgas weg.

Im Betrieb kann ein in der Antriebseinheit aufkommende Kraft zu einer Verschiebung des Rotors 2 in einer axialen Richtung 12 führen. Eine axiale Verschiebung des Kompressorlaufrades 6 in axialer Richtung 12 würde dazu führen, dass an der Übergangsstelle 9 die Kühlluftströmungsrichtung 8 und der Verdichterkanal 10 nicht mehr optimal gegeneinander angeordnet sind. Eine Versetzung an der Übergangsstelle 9 würde zu Strömungsverlusten des Kühlgases führen, was zu einer verminderten Kühlung führen würde. Daher wird die Komponente 5 derart ausgebildet, dass sie der Bewegung des Kompressorlaufrades 6 entlang der Richtung 12 folgt. Dazu ist eine Verschiebevorrichtung 13 vorgesehen, die einerseits mit der Komponente 5 über eine als Buchse 19 ausgebildete Halterung fest verbunden ist und andererseits über einen Aktor 14 an einem Maschinenbauteil 22 über einen Flansch 21 angekoppelt ist. Der Aktor 14 ist derart ausgebildet, dass eine Kraft in der Verschiebevorrichtung 13 zu einer Bewegung der Buchse 19 mit der daran befestigten Komponente 5 in axialer Richtung 12 führt. Ein geeignetes Maschinenbauteil 22 könnte beispielsweise das Generatorgehäuse sein. Zumindest ist jede Komponente als Maschinenbauteil geeignet, die der Bewegung des Rotors 2 in axialer Richtung 12 nicht folgt, sondern quasi fest angeordnet ist.

Die Verschiebevorrichtung 13 umfasst eine Grundplatte 15 sowie eine erste Anschlagplatte 16 und eine zweite Anschlagplatte 17. Die erste Anschlagplatte 16 und die zweite Anschlagplatte 17 sind im Wesentlichen senkrecht auf der Grundplatte 15 angeordnet. Zwischen der ersten Anschlagplatte 16 und der zweiten Anschlagplatte 17 befindet sich ein als Führungsstange 20 ausgebildetes Führungselement, mit dem die Buchse 19 derart befestigt ist, dass durch die Führungsstange 20 die Bewegungsrichtung der über die Buchse 19 angebundenen Komponente 5 definiert ist. In dem in Figur 1 dargestellten Fall wird die Bewegung der Komponente 5 in fünf Freiheitsgrade beschränkt und kann sich im sechsten Freiheitsgrad, hier in einer axialen Richtung 12, bewegen. Durch den mit der Verschiebeeinrichtung 13 verbundenen Aktor 14 wird die Bewegung in diesem sechsten Freiheitsgrad definiert ausgeführt. Die Verschiebevorrichtung 13 ist derart ausgebildet, dass eine Bewegung sowohl in axialer Richtung 12 als auch entgegen der axialen Richtung 12 erfolgen kann. Der Aktor 14 wird über eine nicht näher dargestellte Automatisierungseinrichtung angesteuert, wobei die Bewegung des Rotors 2 erfasst wird und ein Signal an die Automatisierungseinrichtung gegeben wird, wodurch der Aktor 14 eine entsprechende Kraft auf die Verschiebevorrichtung 13 ausübt, um die Bewegung des Rotors 2 auszugleichen.

Die Verschiebevorrichtung 13 und der Aktor 14 sind zwecks gleichmäßiger Lagerung, Führung und Axialbewegung zumindest zweimal, jedoch nach Bedarf mehrmals am Umfang der zu verschiebenden Komponente 5 angeordnet.

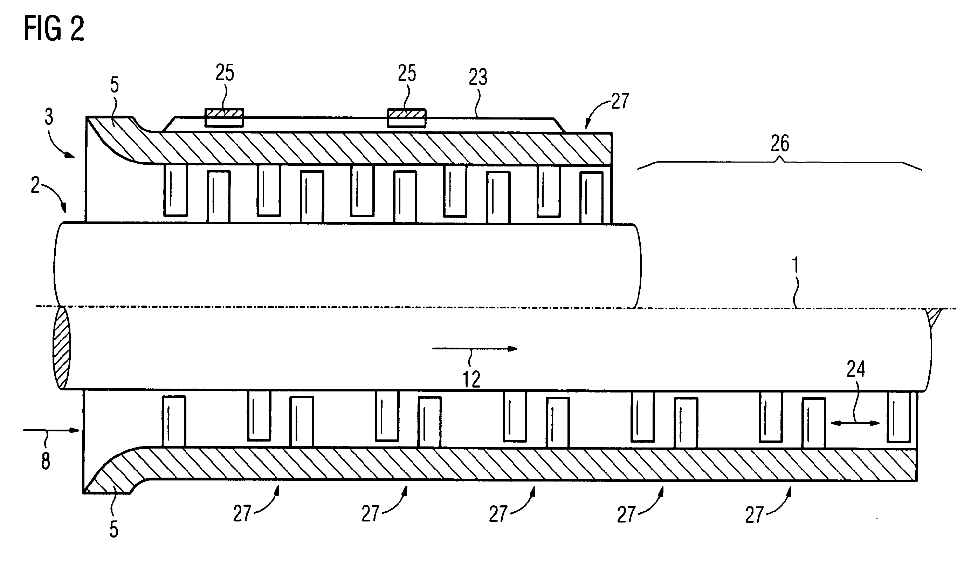

In der Figur 2 ist ein Ausschnitt einer Führungsschiene 23 zum Lagern der Komponente 5 dargestellt. Unterhalb der Rotationsachse 1 ist die Lagerung der Komponente 5 gemäß dem Stand der Technik dargestellt. Gemäß dem Stand der Technik ist die Komponente 5 ortsfest angeordnet, so dass der Rotor 2 in der axialen Richtung 12 bewegt werden kann. Diese Bewegung konnte einem maximalen Abstand 24 folgen. Erfindungsgemäß wird nun vorgeschlagen, dass die Komponente 5 der Bewegung des Rotors 2 in der axialen Richtung 12 folgt. Dazu wird die Komponente 5 auf den Führungsschienen 23 gelagert. Die Führungsschienen 23 und ein Führungsschutz 25 sind als "Führungssystem" zur gleichmäßigen Lagerung, Führung und Axialbewegung zumindest zweimal, jedoch nach Bedarf mehrmals am Umfang der Komponente 5 angeordnet. Dazu sind die Führungsschienen 23 in definierter Richtung, hier in axialer Richtung 12 ausgerichtet. Die Lagerung der Komponente 5 auf den Führungsschienen 23 führt zu einer guten Beweglichkeit in der definierten Richtung 12. Die Komponente 5 wird hierzu an dem Führungsschutz 25 geführt. Insgesamt kann durch die Bewegung der Komponente 5 entlang der definierten Richtung 12 eine Längenersparnis 26 erreicht werden. Durch die Längenersparnis 26 könnte eine Kompressorstufe 27 aufgrund von Wirkungsgradsteigerungen gemäß dem Stand der Technik entfallen. Die Führungsschienen 23 können entweder Teil des Gehäuses der zu verschiebenden Komponente 5 oder Teil des Generatorstators sein. Die Richtungspositionierung der Komponente 5 kann wahlweise stufenlos oder über definierte Positionen erfolgen. Die Gesamtlänge des Generators und insbesondere des Rotors 2 kann verringert werden, was zu einer Verringerung der Gesamtkosten sowie verbesserten Betriebseigenschaften des Generators führt. Darüber hinaus bietet die Möglichkeit der Verschiebung der Komponente 5, die auch als Kompressorleitvorrichtung ausgebildet sein kann, eine definierte Verstellmöglichkeit sowie eine Anpassung an einen aktuellen Betriebszustand.

## Patentansprüche

1. Dynamoelektrische Maschine,
umfassend einen Stator und einen drehbar gelagerten Rotor (2), der in einer Richtung (12) verschiebbar ist,
wobei eine Komponente (5) um den Rotor (2) angeordnet ist, die als Kompressionsdiffusor zum Führen von Kühlmedium ausgebildet ist,
wobei der Rotor (2) ein Kompressorlaufrad (6) zum Führen von Kühlmedium aufweist, **dadurch gekennzeichnet, dass**
die dynamoelektrische Maschine ausgebildete Führungsschienen (23) aufweist, wobei die Komponente (5) über die Führungsschienen (23) bewegbar ist,
wobei die Führungsschienen (23) am Stator angeordnet sind,
wobei eine Verschiebevorrichtung (13) zum Verschieben der Komponente (5) vorgesehen ist,
und die Verschiebeeinrichtung (13) derart ausgebildet ist, dass der Kompressordiffusor verschiebbar ist, wenn das Kompressorlaufrad (6) in axialer Richtung verschoben wird, so dass einer im Betrieb auftretenden Verschiebung des Rotors (2) in axialer Richtung gefolgt wird.

2. Dynamoelektrische Maschine nach Anspruch 1,
wobei die Verschiebevorrichtung (13) einen Verschiebekasten zum Anbringen an die Komponente (5) aufweist,
wobei die Verschiebevorrichtung (13) ferner einen Aktor (14) zum Ausüben einer Kraft auf den Verschiebekasten aufweist,
wobei der Aktor (14) an einer Maschinenkomponente angeordnet ist.

3. Dynamoelektrische Maschine nach Anspruch 2,
wobei der Verschiebekasten eine Grundplatte (15), eine erste Anschlagplatte (16) und eine zweite Anschlagplatte (17) aufweist,
wobei der Aktor (14) zum Ausüben einer Kraft auf eine Halterung (19) ausgebildet ist

4. Dynamoelektrische Maschine nach Anspruch 2 oder 3,
mit einem Führungselement (20),
wobei das Führungselement (20) und die Halterung (19) relativ zueinander ausgebildet sind.

5. Verfahren zur Kühlung einer dynamoelektrischen Maschine, wobei ein Kühlmedium über einen Kompressordiffusor und einem in Strömungsrichtung (8) nach dem Kompressordiffusor vorgeordneten Kompressorlaufrad (6) in die elektrische Maschine strömt,
**dadurch gekennzeichnet, dass**
der Kompressordiffusor verschoben wird, wenn das Kompressorlaufrad (6) in axialer Richtung (12) derart verschoben wird,
dass eine im Betrieb auftretende Verschiebung des Rotors in einer axialer Richtung gefolgt wird.

## Claims

1. Dynamoelectric machine
comprising a stator and a rotatably mounted rotor (2) which can be displaced in a direction (12),
with a component (5) being arranged around the rotor (2), this component being in the form of a compression diffuser for guiding cooling medium,
with the rotor (2) having a compressor impeller (6) for guiding cooling medium,
**characterized in that**
the dynamoelectric machine has shaped guide rails (23), it being possible to move the component (5) over the guide rails (23),
with the guide rails (23) being arranged on the stator,
with a displacement apparatus (13) for displacing the component (5) being provided,
and the displacement device (13) being formed in such a way that the compressor diffuser can be displaced when the compressor impeller (6) is displaced in the axial direction, with the result that a displacement of the rotor (2) in the axial direction which occurs during operation is followed.

2. Dynamoelectric machine according to Claim 1,
with the displacement apparatus (13) having a displacement box for attachment to the component (5),
with the displacement apparatus (13) also having an actuator (14) for exerting a force on the displacement box,
with the actuator (14) being arranged on a machine component.

3. Dynamoelectric machine according to Claim 2,
with the displacement box having a base plate (15), a first stop plate (16) and a second stop plate (17),
with the actuator (14) being designed to exert a force on a holding means (19).

4. Dynamoelectric machine according to Claim 2 or 3,
having a guide element (20),
with the guide element (20) and the holding means (19) being formed relative to one another.

5. Method for cooling a dynamoelectric machine,
with a cooling medium flowing into the electric machine via a compressor diffuser and a compressor impeller (6) which is arranged upstream of the compressor diffuser in the flow direction (8),
**characterized in that**
the compressor diffuser is displaced when the compressor impeller (6) is displaced in the axial direction (12) in such a way
that a displacement of the rotor in an axial direction which occurs during operation is followed.

## Revendications

1. Machine dynamoélectrique,
comprenant un stator et un rotor ( 2 ), qui est monté tournant et qui peut être déplacé dans une direction ( 12 ), dans laquelle, un composant ( 5 ) est placé autour du rotor ( 2 ) et est constitué en diffuseur de compression pour la conduite de fluide de refroidissement,
dans laquelle le rotor ( 2 ) comporte une roue ( 6 ) de compresseur pour la conduite du fluide de refroidissement, **caractérisée en ce que**
la machine dynamoélectrique comporte des barres ( 23 ) de guidage, le composant ( 5 ) pouvant être déplacé sur les barres ( 23 ) de guidage,
les barres ( 23 ) de guidage sont montées sur le stator,
un dispositif ( 13 ) de déplacement étant prévu pour déplacer le composant ( 5 ),
et le dispositif ( 13 ) de déplacement est tel que le diffuseur de compresseur peut être déplacé, lorsque la roue ( 6 ) du compresseur est déplacée en direction axiale, de manière à ce qu'il s'ensuive un déplacement, se produisant en fonctionnement, du rotor ( 2 ) dans la direction axiale.

2. Machine dynamoélectrique suivant la revendication 1,
dans laquelle le dispositif ( 13 ) de déplacement comporte un caisson de déplacement à mettre sur le composant ( 5 ), dans laquelle le dispositif ( 13 ) de déplacement comporte, en outre, un actionneur ( 14 ), pour appliquer une force au caisson de déplacement,
dans laquelle l'actionneur ( 14 ) est placé sur un composant de machine.

3. Machine dynamoélectrique suivant la revendication 2,
dans laquelle le caisson de déplacement comporte une plaque ( 15 ) de base, une première plaque ( 16 ) de butée et une deuxième plaque ( 17 ) de butée,
dans laquelle l'actionneur ( 14 ) est constitué pour appliquer une force à une fixation ( 19 ).

4. Machine dynamoélectrique suivant la revendication 2 ou 3, comprenant un élément ( 20 ) de guidage,
dans lequel l'élément ( 20 ) de guidage et la fixation ( 19 ) sont constitués relativement l'un par rapport à l'autre.

5. Procédé de refroidissement d'une machine dynamoélectrique dans lequel un fluide de refroidissement passe dans la machine électrique en passant par un diffuseur de compresseur et par une roue ( 6 ) de compresseur montée en amont, dans le sens ( 8 ) d'écoulement, du diffuseur de compresseur, **caractérisé en ce que**
on déplace le diffuseur de compresseur lorsque la roue ( 6 ) de compresseur est déplacée dans la direction ( 12 ) axiale, de manière à ce qu'il s'ensuive un déplacement, se produisant en fonctionnement, du rotor s'en suive dans une direction axiale.
